# FASCICULE DE BREVET EUROPEEN

(11) **EP 4 149 722 B1**
(45) Date de publication et mention de la délivrance du brevet: **28.02.2024**
(21) Numéro de dépôt: 21726636.0
(22) Date de dépôt: 17.05.2021
(51) Int. Cl.: B25J 5/00, H02G 1/02, B25J 11/00, B25J 9/00, B66F 11/04, B66F 9/065, B66F 9/075

(54) **DISPOSITIF D'INTERVENTION SUR UN ENSEMBLE DE LIGNE DE TRANSPORT D'ÉLECTRICITÉ**
VORRICHTUNG ZUR DURCHFÜHRUNG VON EINGRIFFEN AN EINER ELEKTRISCHEN ÜBERTRAGUNGSLEITUNGSANORDNUNG
DEVICE FOR CARRYING OUT INTERVENTIONS ON AN ELECTRICAL TRANSMISSION LINE ASSEMBLY

(30) Priorité: 15.05.2020 FR 2004833
(43) Date de publication de la demande: 22.03.2023
(73) Titulaire: Enedis, 92079 Paris La Defense Cedex (FR)
(72) Inventeur: LONARDI, Francis, 57260 DIEUZE (FR); DEL SORDO, Emmanuel, 54110 DOMBASLE SUR MEURTHE (FR)
(74) Mandataire: Regimbeau
(86) Numéro de dépôt international: PCT/EP2021/062915
(87) Numéro de publication internationale: WO 2021/229091

(56) Documents cités:
- CN-A- 102 354 931
- CN-A- 103 111 996
- CN-A- 107 053 261
- CN-A- 110 601 079
- JP-A- H07 137 997

## Description

L'invention concerne un dispositif d'intervention sur un ensemble de ligne de transport d'électricité.

Le domaine de l'invention concerne les réseaux de distribution d'électricité, notamment les lignes électriques aériennes.

Les travaux sur ces lignes sont à risques pour les personnes.

Aujourd'hui, quand on intervient sur le réseau aérien, les agents travaillent avec des perches isolantes en hauteur à partir d'élévateur ou échelles. Il est également connu d'automatiser ces travaux par un robot, comme le montre le document CN 103111996 A . L'une des difficultés est que le robot peut avoir à manipuler des parties de l'ensemble de ligne de transport d'électricité, qui ne sont pas au même potentiel électrique.

Un objectif de l'invention est d'obtenir un dispositif d'intervention sur un ensemble de ligne de transport d'électricité, qui pallie les inconvénients mentionnés ci-dessus et qui permette d'automatiser par plusieurs bras de robot la manipulation de parties qui ne sont pas au même potentiel électrique.

A cet effet, un premier objet de l'invention est un dispositif d'intervention sur un ensemble de ligne de transport ou de distribution d'électricité, comportant un engin automoteur de levage d'un support d'extrémité mobile par rapport à une embase inférieure de l'engin, au moins un bras de robot, qui est muni d'outils pour l'exécution télécommandée d'une tâche déterminée sur l'ensemble de ligne et qui est fixé au support,
caractérisé en ce que
le bras de robot est fixé sur une plateforme, fixée à respectivement au moins deux tubes d'isolation électrique situés à distance l'un de l'autre et face à face,
une partie des tubes d'isolation électrique étant fixée au support d'extrémité de l'engin automoteur de levage.

Grâce à l'invention, les agents restent au sol et peuvent piloter un robot qui est en hauteur et qui fait le travail.

Selon l'invention, le dispositif comporte en outre au moins un premier bras de robot et au moins un deuxième bras de robot, qui sont munis des outils pour l'exécution télécommandée d'une tâche déterminée sur l'ensemble de ligne de transport d'électricité et qui sont fixés au support,
le premier bras de robot et le deuxième bras de robot sont fixés respectivement sur une plateforme de gauche et sur une plateforme de droite, lesquelles sont fixées à respectivement un côté gauche et un côté droit des au moins deux tubes d'isolation électrique,
les côtés gauches des tubes d'isolation électrique étant situés à distance l'un de l'autre et étant face à face,
les côtés droits des tubes d'isolation électrique étant situés à distance l'un de l'autre et étant face à face,
le côté gauche de chaque tube d'isolation électrique étant raccordé à son côté droit par une partie médiane de ce tube d'isolation électrique et étant distant de son côté droit,
les parties médianes des tubes d'isolation électrique étant fixées au support d'extrémité de l'engin automoteur de levage.

Grâce à l'invention, les deux bras de robots sont maintenus à distance l'un de l'autre en étant isolés électriquement l'un de l'autre par une distance de sécurité formée entre les plateformes par les parties médianes des tubes d'isolation électrique, pour permettre les travaux sur une ligne haute tension. De plus cette distance de sécurité formée par les parties médianes des tubes d'isolation électrique entre les plateformes des bras de robots est mise à profit pour y fixer le support d'extrémité de l'engin de levage, qui est donc isolé électriquement par rapport à chacun des deux bras de robot. On réalise donc par les tubes une isolation électrique haute tension entre trois éléments à la fois, à savoir les deux bras de robot et le support d'extrémité de l'engin de levage.

Suivant un mode de réalisation de l'invention, les parties des tubes d'isolation électrique, auxquelles est fixée le support d'extrémité de l'engin automoteur de levage, sont situées à distance l'une de l'autre et sont face à face.

Suivant un mode de réalisation de l'invention, chaque tube d'isolation électrique a une tenue électrique supérieure à 50 kV par longueur de 30 cm de tube.

Suivant un mode de réalisation de l'invention, chaque tube d'isolation électrique comporte un cylindre longitudinal, qui est en fibres de verre et résine époxy, le cylindre longitudinal étant rempli d'une mousse de polyuréthane.

Suivant un mode de réalisation de l'invention, le support d'extrémité est éloigné d'une distance de sécurité d'au moins 10 centimètres par rapport à la plateforme le long de chacun des tubes d'isolation électrique.

Suivant un mode de réalisation de l'invention, le support d'extrémité de l'engin automoteur de levage comporte un longeron de gauche et un longeron de droite, qui sont distants l'un de l'autre, qui s'étendent transversalement aux parties des tubes d'isolation électrique, qui sont fixés aux parties des tubes d'isolation électrique et qui sont raccordés l'un à l'autre par un élément de liaison,
l'élément de liaison étant fixé à l'extrémité d'au moins un élément supérieur de levage de l'engin de levage,
l'élément supérieur de levage étant mobile par rapport à l'embase inférieure.

Suivant un mode de réalisation de l'invention, l'engin de levage comporte au moins un élément de levage articulé par au moins un axe de rotation par rapport à l'embase.

Suivant un mode de réalisation de l'invention, la plateforme est fixée à au moins un des tubes d'isolation électrique par l'intermédiaire d'au moins un manchon enserrant le tube d'isolation électrique, la partie des tubes d'isolation électrique étant fixée au support d'extrémité de l'engin automoteur de levage par l'intermédiaire d'au moins un autre manchon enserrant respectivement la partie des tubes d'isolation électrique.

Suivant un mode de réalisation de l'invention, chaque manchon comporte une première pièce délimitant un premier espace intérieur semi-cylindrique, une deuxième pièce délimitant un deuxième espace intérieur semi-cylindrique, des premier et deuxième axes de rotation s'étendant le long des espaces intérieurs semi-cylindriques et distants l'un de l'autre, des moyens de serrage, et un tenon de liaison,
la deuxième pièce étant articulée par rapport à la première pièce par le premier axe de rotation,
les moyens de serrage étant articulés par rapport à la deuxième pièce par le deuxième axe de rotation,
la première pièce comportant un crochet de serrage, qui est situé à distance du premier axe de rotation et qui délimite une ouverture apte à recevoir les moyens de serrage,
la deuxième pièce comportant un trou de passage transversal par rapport aux premier et deuxième axes de rotation, le tenon de liaison étant apte à être fixé dans le trou de passage transversal et comportant une tête extérieure de liaison,
le manchon étant apte à occuper une position de desserrage, dans laquelle la deuxième pièce et la première pièce sont ouvertes l'une par rapport à l'autre et les moyens de serrage sont à distance de l'ouverture du crochet de serrage pour permettre d'insérer l'un des tubes d'isolation électrique dans les premier et deuxième espaces intérieurs semi-cylindriques,
le manchon étant apte à occuper une position de serrage, dans laquelle la première pièce et la deuxième pièce sont refermées l'une sur l'autre, ledit tube d'isolation électrique est serré dans les premier et deuxième espaces intérieurs semi-cylindriques entre la première pièce et la deuxième pièce, les moyens de serrage sont serrés contre l'ouverture du crochet de serrage, pour fixer le manchon sur le tube d'isolation électrique, le tenon de liaison est fixé dans le trou de passage transversal et la tête extérieure de liaison est positionnée à l'extérieur de la deuxième pièce et est fixée à la plateforme ou au support d'extrémité.

Suivant un mode de réalisation de l'invention, l'engin de levage comporte au moins quatre éléments de levage articulés l'un à la suite de l'autre par quatre axes de rotation par rapport à l'embase.

Suivant un mode de réalisation de l'invention, le premier bras de robot et le deuxième bras de robot sont prévus pour être en contact avec respectivement des première et deuxièmes parties distantes l'une de l'autre de l'ensemble de ligne de transport d'électricité haute tension.

Suivant un mode de réalisation de l'invention, le dispositif comporte au moins une caméra de visualisation du premier bras de robot et/ou du deuxième bras de robot.

Suivant un mode de réalisation de l'invention, le dispositif comporte une unité de télécommande du premier bras de robot et du deuxième bras de robot par une liaison sans fil.

L'invention sera mieux comprise à la lecture de la description qui va suivre, donnée uniquement à titre d'exemple non limitatif en référence aux figures ci-dessous des dessins annexés.
La figure 1 représente une vue schématique en perspective d'un dispositif d'intervention sur un ensemble de ligne de transport d'électricité haute tension suivant un mode de réalisation de l'invention.
La figure 2 représente une vue schématique de dessus d'une partie du dispositif d'intervention sur un ensemble de ligne de transport d'électricité haute tension suivant un mode de réalisation de l'invention.
La figure 3 représente une vue schématique en perspective d'une partie du dispositif d'intervention sur un ensemble de ligne de transport d'électricité haute tension suivant un mode de réalisation de l'invention.
La figure 4 représente une vue schématique en perspective d'une partie du dispositif d'intervention sur un ensemble de ligne de transport d'électricité haute tension suivant un mode de réalisation de l'invention.
La figure 5 représente une vue schématique en perspective d'une partie d'un manchon de serrage pouvant être utilisé dans le dispositif d'intervention sur un ensemble de ligne de transport d'électricité haute tension suivant un mode de réalisation de l'invention, dans une position de desserrage.
La figure 6 représente une vue schématique en perspective d'une partie d'un manchon de serrage pouvant être utilisé dans le dispositif d'intervention sur un ensemble de ligne de transport d'électricité haute tension suivant un mode de réalisation de l'invention, dans une position de serrage.
La figure 7 représente une vue schématique en perspective d'une partie d'un manchon de serrage pouvant être utilisé dans le dispositif d'intervention sur un ensemble de ligne de transport d'électricité haute tension suivant un mode de réalisation de l'invention.
La figure 8 représente une vue schématique de côté d'un manchon de serrage pouvant être utilisé dans le dispositif d'intervention sur un ensemble de ligne de transport d'électricité haute tension suivant un mode de réalisation de l'invention, dans une position de serrage.

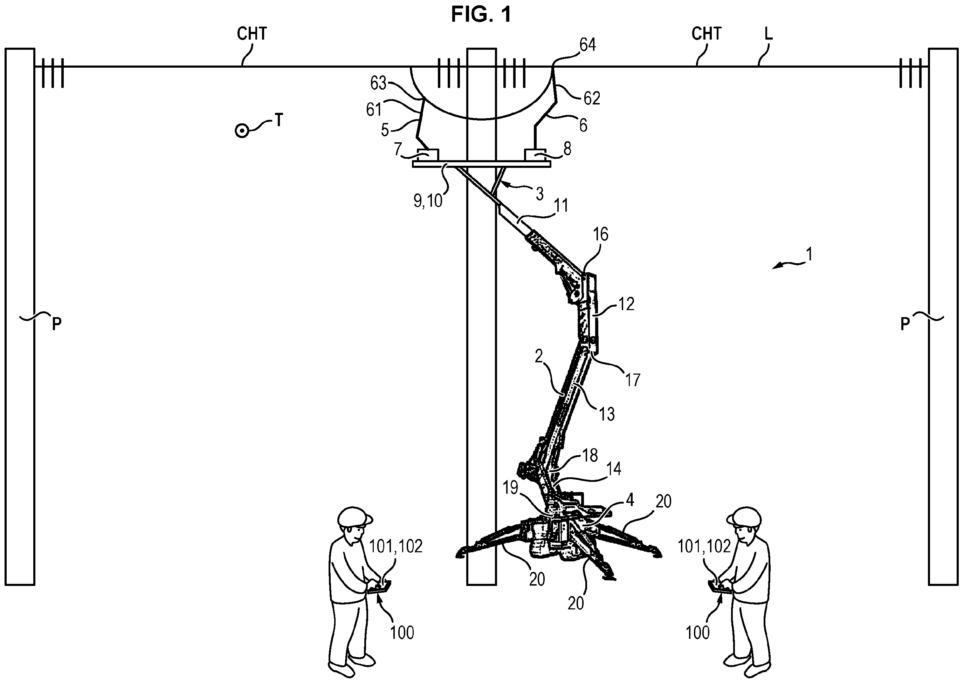

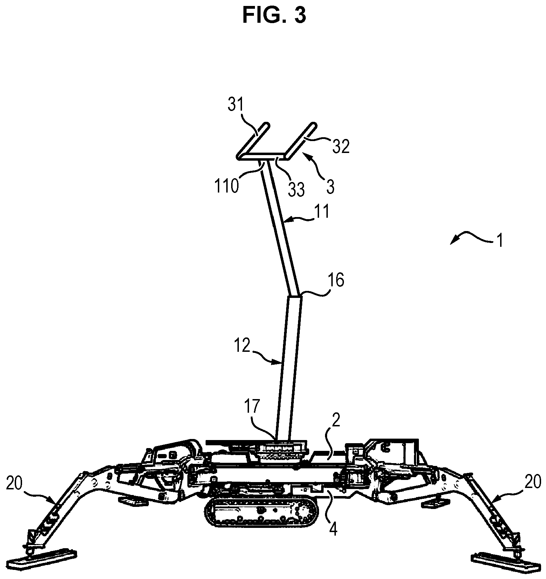

On décrit ci-dessous plus en détail en référence aux figures 1 à 4 un exemple de dispositif 1 d'intervention sur un ensemble de ligne L de transport d'électricité ou de distribution d'électricité. L'ensemble de ligne L de transport d'électricité ou de distribution d'électricité peut être à haute tension, par exemple de l'ordre de 20000 Volts (ou d'une autre valeur de haute tension). Bien entendu, l'ensemble de ligne L de transport d'électricité ou de distribution d'électricité peut être autre qu'à haute tension, et peut être par exemple à tension plus basse que la haute tension.

A la figure 1, l'ensemble de ligne L de transport d'électricité peut être du type ligne électrique aérienne et comporter plusieurs conducteurs CHT électriques filaires, séparés et gainés chacun par une couche d'isolant, qui sont suspendus sur la partie supérieure de pylônes P pour maintenir les conducteurs CHT électriques à une certaine hauteur au-dessus du sol. L'ensemble de ligne L de transport d'électricité peut transporter une haute tension en courant alternatif, par exemple supérieure à 10 kV, et par exemple égale à 20 kV ou autre, pouvant être triphasée ou autres.

Aux figures 1 à 4, le dispositif 1 d'intervention comporte un engin 2 automoteur de levage, qui peut être piloté par une personne pour se déplacer sur le soljusqu'à une position choisie sous et/ou au voisinage de l'ensemble de ligne L de transport d'électricité. L'engin 2 automoteur de levage comporte une embase inférieure 4, qui est automotrice en pouvant être par exemple roulante à l'aide de chenilles, de roues ou autres sur le sol. L'engin 2 automoteur de levage comporte au moins un support 3 supérieur d'extrémité, qui est déplaçable au moins en hauteur par rapport à l'embase inférieure 4. L'engin 2 automoteur de levage peut comporter des pieds 20 d'immobilisation sur le sol pouvant être déployés autour de l'embase 4 à l'arrêt. Ainsi, l'engin 2 automoteur de levage peut être du type grue, par exemple du type dit araignée.

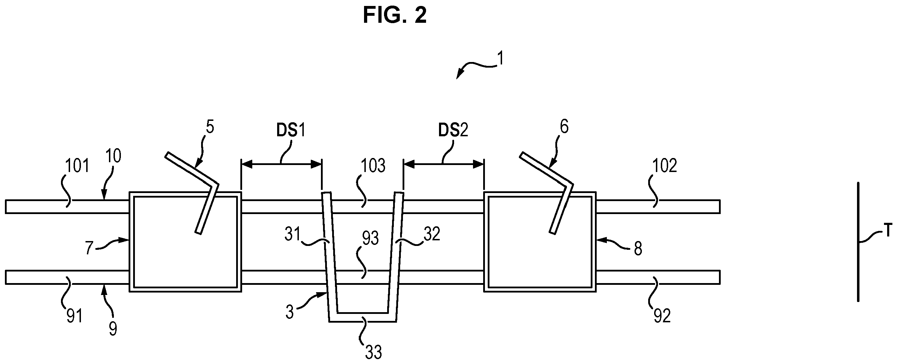

Aux figures 1 et 2, le dispositif 1 d'intervention comporte au moins un bras 5 de robot. Le bras 5 de robot est muni d'outils pour l'exécution télécommandée d'une tâche déterminée sur l'ensemble de ligne L. Le bras 5 de robot est fixé au support 3. Le bras 5 de robot est fixé sur une plateforme 7, fixée à respectivement au moins deux tubes 9 et 10 d'isolation électrique. Les deux tubes 9 et 10 d'isolation électrique sont situés à distance l'un de l'autre et sont face à face. Une partie 93 du tube 9 d'isolation électrique est fixée au support 3 d'extrémité de l'engin 2 automoteur de levage. Une partie 103 du tube 10 d'isolation électrique est fixée au support 3 d'extrémité de l'engin 2 automoteur de levage. Suivant un mode de réalisation de l'invention, les parties 93, 103 sont situées à distance l'une de l'autre et sont face à face.

Suivant un mode de réalisation de l'invention, représenté aux figures 1 et 2, le dispositif 1 d'intervention comporte au moins un premier bras 5 de robot et au moins un deuxième bras 6 de robot. Chaque bras 5, 6 de robot est muni à son extrémité supérieure 61, 62 d'un ou plusieurs outils 63, 64. Chaque bras 5, 6 de robot est fixé au support 3 supérieur d'extrémité, ainsi que cela sera décrit ci-dessous. Les bras 5, 6 de robot et les outils 63, 64 permettent l'exécution télécommandée d'une tâche déterminée sur l'ensemble de ligne L de transport d'électricité. Chaque bras 5, 6 de robot peut être mono-articulé ou poly-articulé. Chaque bras 5, 6 de robot et chaque outil 63, 64 est télécommandé dans ses déplacements et ses actions par une unité 100 de télécommande pouvant être située au sol. Suivant un mode de réalisation de l'invention, l'unité 100 de télécommande communiquent par une liaison de télécommunication sans fil avec les bras 5, 6 de robot et les outils 63, 64 pour envoyer des instructions de déplacement et d'actions aux bras 5, 6 de robot et aux outils 63, 64. L'unité 100 de télécommande comporte une interface 101 de commande pouvant être actionnée par une personne et peut comporter un écran 102 de visualisation d'une image captée par une caméra (non représentée) de visualisation des bras 5, 6 de robot et de l'ensemble de ligne L de transport d'électricité. Il peut être prévue une telle caméra sur chaque bras 5, 6 de robot et/ou sur chaque plateforme 7, 8.

Suivant un mode de réalisation de l'invention, le premier bras 5 de robot peut être en contact avec une première partie de l'ensemble de ligne L de transport d'électricité, tandis que le deuxième bras 6 de robot peut être en contact avec une deuxième partie de l'ensemble de ligne L de transport d'électricité. La deuxième partie de l'ensemble de ligne L de transport d'électricité peut être distante de la première partie de l'ensemble de ligne L de transport d'électricité et ne peut ne pas être au même potentiel électrique que la première partie de l'ensemble de ligne L de transport d'électricité. Il peut ainsi y avoir une en courant alternatif (par exemple supérieure à 10 kV, et par exemple égale à 20 kV) entre la première partie de l'ensemble de ligne L de transport d'électricité et la deuxième partie de l'ensemble de ligne L de transport d'électricité. Par exemple, la tâche déterminée exécutée par les bras 5, 6 de robot peut être que la première partie de l'ensemble de ligne L de transport d'électricité soit tenue par le premier bras 5 du robot et que la deuxième partie de l'ensemble de ligne L de transport d'électricité soit manipulée par le deuxième bras 6 de robot.

Aux figures 1, 2 et 4, le dispositif 1 d'intervention comporte un premier tube 9 d'isolation électrique et un deuxième tube 10 d'isolation électrique, situé par rapport au premier tube 9 d'isolation électrique à une certaine distance s'étendant le long d'une direction T, laquelle est transversale au deuxième tube 10 d'isolation électrique. Le premier bras 5 de robot est fixé sur une plateforme 7 de gauche, elle-même fixée au côté gauche 91 du premier tube 9 d'isolation électrique et au côté gauche 101 du deuxième tube 10 d'isolation électrique, lequel est situé en face du côté gauche 91 du premier tube 9 d'isolation électrique suivant la direction T et à distance de celui-ci. Le deuxième bras 6 de robot est fixé sur une plateforme 8 de droite, elle-même fixée au côté droit 92 du premier tube 9 d'isolation électrique et au côté droit 102 du premier tube 9 d'isolation électrique, lequel est situé en face du droit 92 du premier tube 9 d'isolation électrique suivant la direction T et à distance de celui-ci.

Suivant un mode de réalisation de l'invention, le côté gauche 91 est raccordé au côté droit 92 par la partie 93 (alors appelée partie médiane 93) du premier tube 9 d'isolation électrique, cette partie médiane 93 étant donc de longueur LS non nulle suivant la première direction D1 d'extension du premier tube 9 entre son côté gauche 91 et son côté droit 92. Le côté gauche 101 est raccordé au côté droit 102 par la partie 103 (alors appelée partie médiane 103) du deuxième tube 10 d'isolation électrique, cette partie médiane 103 étant donc de longueur LS non nulle suivant la deuxième direction D2 d'extension du deuxième tube 10 entre son côté gauche 101 et son côté droit 102. La partie médiane 93 du premier tube 9 d'isolation électrique et la partie médiane 103 du deuxième tube 10 d'isolation électrique sont fixées au support 3 d'extrémité de l'engin 2 automoteur de levage. La partie médiane 93 du premier tube 9 d'isolation électrique et la partie médiane 103 du deuxième tube 10 d'isolation électrique sont situées à distance l'une de l'autre et sont face à face.

Le premier bras 5 de robot est ainsi isolé électriquement du deuxième bras 6 de robot et de l'engin 2 de levage, avec le deuxième bras 6 de robot également isolé électriquement de l'engin 2 de levage, pour permettre d'intervenir sur l'ensemble de ligne L de transport d'électricité en permettant au personnel de rester au sol.

Suivant un mode de réalisation de l'invention, le premier tube 9 d'isolation électrique est configuré pour avoir une première tenue électrique supérieure à 50 kV par longueur de 30 cm de ce premier tube 9 le long de la première direction D1 d'extension. Par exemple, le premier tube 9 d'isolation électrique est configuré pour avoir une première tenue électrique de 100 kV par longueur de 30 cm de ce premier tube 9 le long de la première direction D1 d'extension. Suivant un mode de réalisation de l'invention, le premier tube 9 d'isolation électrique comporte un cylindre longitudinal, qui s'étend de la droite vers la gauche et est en fibres de verre et résine époxy, le cylindre longitudinal étant rempli d'une mousse de polyuréthane. Suivant un mode de réalisation de l'invention, le premier tube 9 d'isolation électrique à une tenue à la flexion supérieure à 250 kg.

Suivant un mode de réalisation de l'invention, le deuxième tube 10 d'isolation électrique est configuré pour avoir une deuxième tenue électrique supérieure à 50 kV par longueur de 30 cm de ce deuxième tube 10 le long de la deuxième direction D2 d'extension. Par exemple, le deuxième tube 10 d'isolation électrique est configuré pour avoir une deuxième tenue électrique supérieure à 50 kV par longueur de 30 cm de ce deuxième tube 10 le long de la deuxième direction D2 d'extension. Suivant un mode de réalisation de l'invention, le deuxième tube 10 d'isolation électrique comporte un cylindre longitudinal, qui s'étend de la droite vers la gauche et est en fibres de verre et résine époxy, le cylindre longitudinal étant rempli d'une mousse de polyuréthane. Suivant un mode de réalisation de l'invention, le deuxième tube 10 d'isolation à une tenue à la flexion supérieure à 250 kg.

Suivant un mode de réalisation de l'invention, la première tenue électrique et la deuxième tenue électrique peuvent être procurées également par le fait que le support 3 d'extrémité est éloigné d'une première distance DS1 de sécurité supérieure ou égale à 10 centimètres par rapport à la plateforme 7 de gauche le long de chacun des tubes 9 et 10 d'isolation électrique suivant les première et deuxième directions D1 et D2.

Suivant un mode de réalisation de l'invention, la première tenue électrique et la deuxième tenue électrique peuvent être procurées également par le fait que le support 3 d'extrémité est éloigné d'une deuxième distance DS2 de sécurité supérieure ou égale à 10 centimètres par rapport à la plateforme 8 de droite le long de chacun des tubes 9 et 10 d'isolation électrique suivant les première et deuxième directions D1 et D2.

Suivant un mode de réalisation de l'invention, le premier tube 9 d'isolation électrique est géométriquement parallèle au deuxième tube 10 d'isolation électrique, et la première direction D1 d'extension est géométriquement parallèle à la deuxième direction D2 d'extension. Suivant un autre mode de réalisation de l'invention, le premier tube 9 d'isolation électrique n'est pas géométriquement parallèle au deuxième tube 10 d'isolation électrique et peut être légèrement en oblique par rapport au deuxième tube 10 d'isolation électrique, et la première direction D1 d'extension n'est pas géométriquement parallèle à la deuxième direction D2 d'extension et peut être légèrement en oblique par rapport à la première direction D1 d'extension.

Suivant un mode de réalisation de l'invention, le support 3 d'extrémité de l'engin 2 automoteur de levage est formé par ou comporte un longeron 31 de gauche et un longeron 32 de droite, qui s'étendent suivant la direction T transversale aux parties 93 et 103 des tubes 9 et 10 d'isolation électrique. Le longeron 31 de gauche est distant de et face au longeron 32 de droite. Le longeron 31 de gauche est fixé aux parties 93 et 103 des tubes 9 et 10 d'isolation électrique. Le longeron 32 de droite est fixé aux parties 93 et 103 des tubes 9 et 10 d'isolation électrique. Le longeron 31 de gauche est raccordé au longeron 32 par un élément 33 de liaison, s'étendant au moins suivant les directions D1 et D2 d'extension et pouvant comporter un troisième longeron. L'élément 33 de liaison est fixé à l'extrémité 110 d'un élément 11 supérieur de levage de l'engin 2 de levage, soit directement, soit par un support intermédiaire. L'élément 11 supérieur de levage est déplaçable au moins en hauteur par rapport à l'embase inférieure 4.

Suivant un mode de réalisation de l'invention, l'engin 2 de levage comporte un ou plusieurs éléments de levage, qui sont articulés par un ou plusieurs axes de rotation l'un à la suite de l'autre entre le support 3 d'extrémité et l'embase inférieure 2. Par exemple, quatre éléments 11, 12, 13, 14 de levage sont articulés l'un à la suite de l'autre par quatre axes 16, 17, 18, 19 de rotation par rapport à l'embase 4, ainsi qu'illustré à la figure 1. Bien entendu, un nombre d'éléments de levage plus petit ou plus grand que quatre et un nombre d'axes de rotation plus petit ou plus grand que quatre peut être prévu.

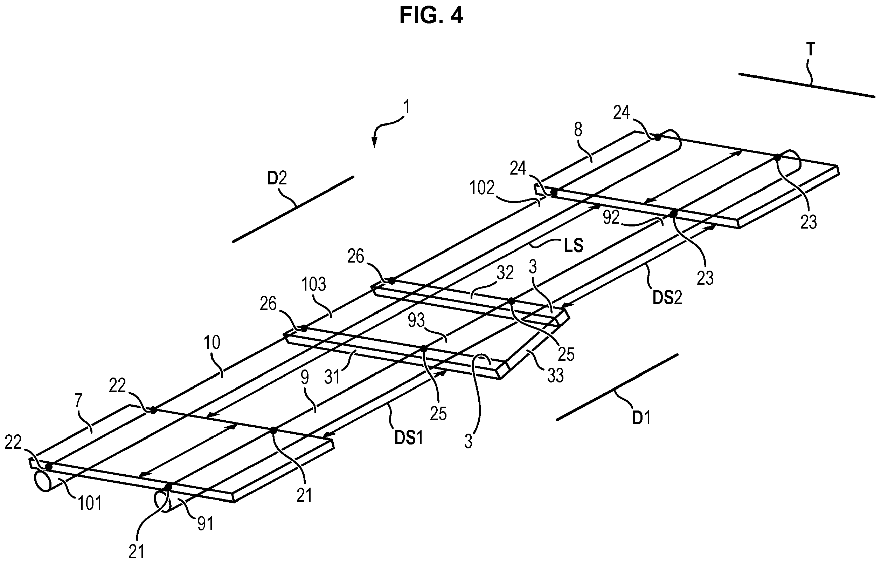

Suivant un mode de réalisation de l'invention, un premier manchon 21 enserre le côté gauche 91 du tube 9 d'isolation électrique pour fixer ce côté gauche 91 à la plateforme 7 de gauche, ainsi qu'illustré à la figure 4. De même, un autre premier manchon 22 enserre le côté gauche 101 du tube 10 d'isolation électrique pour fixer ce côté gauche 101 à la plateforme 7 de gauche.

Suivant un mode de réalisation de l'invention, un deuxième manchon 23 enserre le côté droit 92 du tube 9 d'isolation électrique pour fixer ce côté droit 92 à la plateforme 8 de droite.

Suivant un mode de réalisation de l'invention, un autre deuxième manchon 24 enserre le côté droit 102 du tube 10 d'isolation électrique pour fixer ce côté droit 102 à la plateforme 8 de droite.

Suivant un mode de réalisation de l'invention, un troisième manchon 25 enserre la partie 93 du tube 9 d'isolation électrique pour fixer cette partie 93 au support 3 d'extrémité de l'engin 2 automoteur de levage.

Suivant un mode de réalisation de l'invention, un autre troisième manchon 26 enserre la partie 103 du tube 10 d'isolation électrique pour fixer cette partie 103 au support 3 d'extrémité de l'engin 2 automoteur de levage.

Bien entendu, un, plusieurs ou tous les manchons 21, 22, 23, 24, 25, 26 peut être prévu.

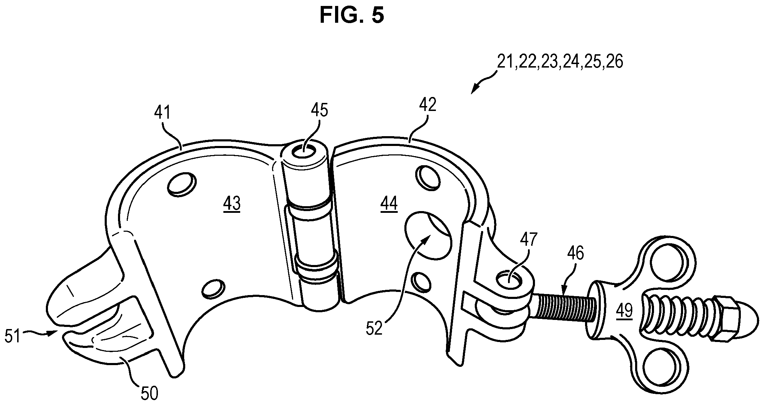

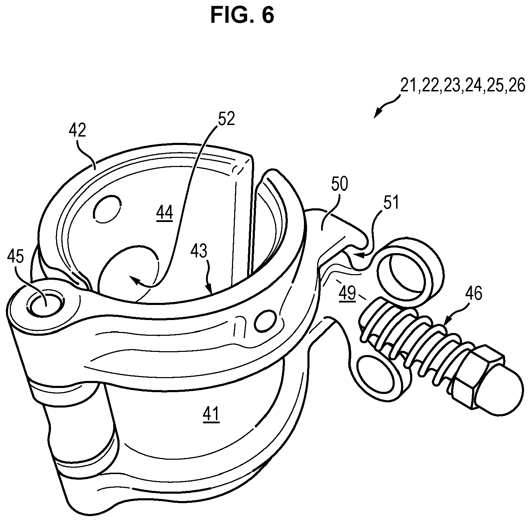

On décrit ci-dessous en référence aux figures 5 à 8 un exemple de réalisation possible des premiers manchons 21 et 22, des deuxièmes manchons 23 et 24 et des troisièmes manchons 25 et 26. Bien entendu, la plateforme 7 de gauche, la plateforme 8 de droite et le support 3 d'extrémité peuvent être fixés aux tubes 9 et 10 d'isolation par des organes de liaison autres que les manchons 21, 22, 23, 24, 25, 26.

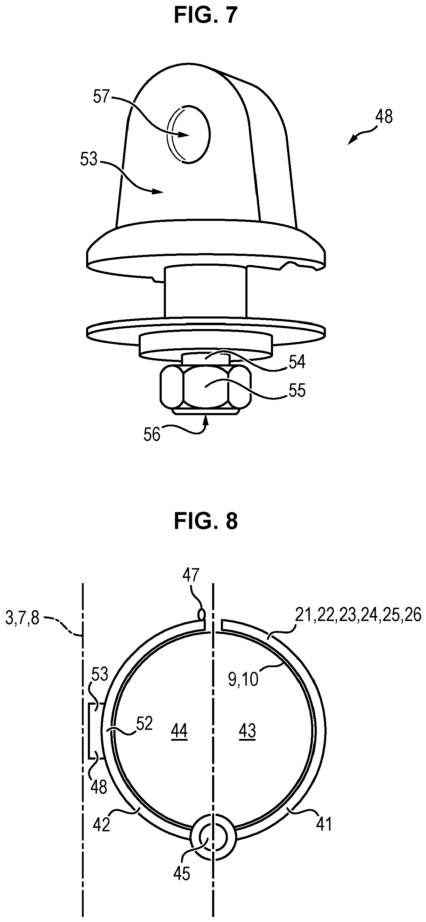

Dans le mode de réalisation des figures 5 à 8, chaque manchon 21, 22, 23, 24, 25, 26 comporte une première pièce 41 articulée par un premier axe 45 de rotation longitudinal sur une deuxième pièce 42. En position de serrage, ainsi qu'illustré aux figures 5 et 8, la première pièce 41 et la deuxième pièce 42 délimitent un espace 43, 44 intérieur cylindrique, dans lequel est serré le côté gauche 91 du tube 9 d'isolation électrique, et/ou le côté gauche 101 du tube 10 d'isolation électrique, et/ou le côté droit 92 du tube 9 d'isolation électrique, et/ou le côté droit 102 du tube 10 d'isolation électrique, et/ou la partie 93 du tube 9 d'isolation électrique, et/ou la partie 103 du tube 10 d'isolation électrique. L'espace 43, 44 intérieur est par exemple cylindrique circulaire, autour d'une direction parallèle au premier axe 45 de rotation longitudinal. Par exemple, la première pièce 41 est en forme de mâchoire semi-cylindrique délimitant un premier espace 43 intérieur semi-cylindrique, et la deuxième pièce 42 est en forme de mâchoire semi-cylindrique délimitant un deuxième espace 44 intérieur semi-cylindrique, avec le premier axe 45 de rotation longitudinal prévu sur un bord des pièces 41 et 42. Le diamètre du premier espace 43 intérieur semi-cylindrique, ainsi que le diamètre du deuxième espace 44 intérieur semi-cylindrique correspond au diamètre extérieur du côté gauche 91 du tube 9 d'isolation électrique, et/ou du côté gauche 101 du tube 10 d'isolation électrique, et/ou du côté droit 92 du tube 9 d'isolation électrique, et/ou du côté droit 102 du tube 10 d'isolation électrique, et/ou de la partie 93 du tube 9 d'isolation électrique, et/ou de la partie 103 du tube 10 d'isolation électrique.

En outre, chaque manchon 21, 22, 23, 24, 25, 26 comporte des moyens 46 de serrage, par exemple une vis 46 de serrage, qui est articulée par rapport à la deuxième pièce 42 par un deuxième axe 47 longitudinal de rotation. Le deuxième axe 47 longitudinal de rotation est distant du premier axe 45 longitudinal de rotation et s'étend également le long des espaces 43, 44 intérieurs semi-cylindriques. La première pièce 41 comporte à distance du premier axe 45 longitudinal de rotation un crochet 50 de serrage, qui délimite une ouverture 51 apte à recevoir la vis 46 de serrage.

Chaque manchon 21, 22, 23, 24, 25, 26 peut être mis au préalable dans une position de desserrage, représentée à la figure 5, dans laquelle la deuxième pièce 42 et la première pièce 41 sont écartées l'une par rapport à l'autre et les moyens de serrage (la vis 46 de serrage) sont à distance de l'ouverture 51 du crochet 50 de serrage. Cela permet d'insérer le côté gauche 91 du tube 9 d'isolation électrique, et/ou le côté gauche 101 du tube 10 d'isolation électrique, et/ou le côté droit 92 du tube 9 d'isolation électrique, et/ou le côté droit 102 du tube 10 d'isolation électrique, et/ou la partie 93 du tube 9 d'isolation électrique, et/ou la partie 103 du tube 10 d'isolation électrique dans les premier et deuxième espaces 43, 44 intérieurs semi-cylindriques des pièces 41 et 42 en position de desserrage. La deuxième pièce 42 comporte entre ses bords longitudinaux un trou 52 de passage transversal par rapport aux premier et deuxième axes 45, 47 longitudinaux de rotation. Dans la position de desserrage, un tenon 48 de liaison peut être vissé dans le trou 52 de passage. Ce tenon 48 de liaison comporte une tête 53 extérieure de liaison, ainsi qu'illustré par exemple à la figure 7. La tête 53 extérieure de liaison est solidaire d'une deuxième vis 54 insérée dans le trou 52 de passage, avec un écrou 55 vissé à l'extrémité 56 de la vis 54 à proximité de la face intérieure du trou 52, tournée vers l'espace intérieur 44 pour fixer le tenon 48 de liaison à la deuxième pièce 42. Le tenon 48 de liaison sert à être fixé à la plateforme 7 de gauche, ou à la plateforme 8 de droite, ou au support 3 d'extrémité, et peut comporter à cet effet un autre trou 57 de passage permettant d'y faire passer par exemple un organe de fixation à la plateforme 7 de gauche, ou à la plateforme 8 de droite, ou au support 3 d'extrémité, tel que par exemple un boulon de fixation.

Pour faire passer chaque manchon 21, 22, 23, 24, 25, 26 de la position de desserrage à la position de serrage, on fait tourner autour du premier axe 45 de rotation longitudinal la première pièce 41 et la deuxième pièce 42 l'une par rapport à l'autre, pour les faire se rapprocher dans une position de fermeture sur le tube 9 ou 10 d'isolation électrique, qui se retrouve alors serré dans les premier et deuxième espaces 43, 44 intérieurs semi-cylindriques entre la première pièce 41 et la deuxième pièce 42. Dans cette position de fermeture, on fait tourner autour du deuxième axe 47 longitudinal de rotation la vis 46 de serrage pour l'insérer dans l'ouverture 51 du crochet 50 de serrage. Puis, on visse un autre écrou 49 de serrage sur la vis 46 de serrage contre le crochet 50 de serrage, qui est alors positionné entre le deuxième axe 47 longitudinal de rotation et l'autre écrou 49, pour fixer chaque manchon 21, 22, 23, 24, 25, 26 sur le côté gauche 91 du tube 9 d'isolation électrique, et/ou le côté gauche 101 du tube 10 d'isolation électrique, et/ou le côté droit 92 du tube 9 d'isolation électrique, et/ou le côté droit 102 du tube 10 d'isolation électrique, et/ou la partie 93 du tube 9 d'isolation électrique, et/ou la partie 103 du tube 10 d'isolation électrique. Dans la position finale de serrage, le tenon 48 de liaison est fixé à la plateforme 7 de gauche ou à la plateforme 8 de droite ou au support 3 d'extrémité.

Bien entendu, les modes de réalisation, caractéristiques, possibilités et exemples décrits ci-dessus peuvent être combinés l'un avec l'autre ou être sélectionnés indépendamment l'un de l'autre, pour autant qu'ils ne s'écartent pas de la portée des revendications ci-jointes.

## Revendications

1. Dispositif (1) d'intervention sur un ensemble de ligne (L) de transport ou de distribution d'électricité, comportant un engin (2) automoteur de levage d'un support (3) d'extrémité mobile par rapport à une embase inférieure (4) de l'engin (2), au moins un bras (5, 6) de robot, qui est muni d'outils pour l'exécution télécommandée d'une tâche déterminée sur l'ensemble de ligne (L) et qui est fixé au support (3),
**caractérisé en ce que**
le bras (5, 6) de robot est fixé sur une plateforme (7, 8), fixée à respectivement au moins deux tubes (9, 10) d'isolation électrique situés à distance l'un de l'autre et face à face,
une partie (93, 103) des tubes (9, 10) d'isolation électrique étant fixée au support (3) d'extrémité de l'engin (2) automoteur de levage,
le dispositif comporte au moins un premier bras (5) de robot et au moins un deuxième bras (6) de robot, qui sont munis des outils pour l'exécution télécommandée d'une tâche déterminée sur l'ensemble de ligne (L) de transport d'électricité et qui sont fixés au support (3),
le premier bras (5) de robot et le deuxième bras (6) de robot sont fixés respectivement sur une plateforme (7) de gauche et sur une plateforme (8) de droite, lesquelles sont fixées à respectivement un côté gauche (91, 101) et un côté droit (92, 102) des au moins deux tubes (9, 10) d'isolation électrique,
les côtés gauches (91, 101) des tubes (9, 10) d'isolation électrique étant situés à distance l'un de l'autre et étant face à face,
les côtés droits (92, 102) des tubes (9, 10) d'isolation électrique étant situés à distance l'un de l'autre et étant face à face,
le côté gauche (91, 101) de chaque tube (9, 10) d'isolation électrique étant raccordé à son côté droit (92, 102) par une partie médiane (93, 103) de ce tube (9, 10) d'isolation électrique et étant distant de son côté droit (92, 102),
les parties médianes (93, 103) des tubes (9, 10) d'isolation électrique étant fixées au support (3) d'extrémité de l'engin (2) automoteur de levage.

2. Dispositif suivant la revendication 1, **caractérisé en ce que** les parties (93, 103) des tubes (9, 10) d'isolation électrique, auxquelles est fixée le support (3) d'extrémité de l'engin (2) automoteur de levage, sont situées à distance l'une de l'autre et sont face à face.

3. Dispositif suivant l'une quelconque des revendications précédentes, **caractérisé en ce que** chaque tube (9, 10) d'isolation électrique a une tenue électrique supérieure à 50 kV par longueur de 30 cm de tube.

4. Dispositif suivant l'une quelconque des revendications précédentes, **caractérisé en ce que** chaque tube (9, 10) d'isolation électrique comporte un cylindre longitudinal, qui est en fibres de verre et résine époxy, le cylindre longitudinal étant rempli d'une mousse de polyuréthane.

5. Dispositif suivant l'une quelconque des revendications précédentes, **caractérisé en ce que** le support (3) d'extrémité est éloigné d'une distance (DS1) de sécurité d'au moins 10 centimètres par rapport à la plateforme (7) le long de chacun des tubes (9, 10) d'isolation électrique.

6. Dispositif suivant l'une quelconque des revendications précédentes, **caractérisé en ce que** le support (3) d'extrémité de l'engin (2) automoteur de levage comporte un longeron (31) de gauche et un longeron (32) de droite, qui sont distants l'un de l'autre, qui s'étendent transversalement aux parties (93, 103) des tubes (9, 10) d'isolation électrique, qui sont fixés aux parties (93, 103) des tubes (9, 10) d'isolation électrique et qui sont raccordés l'un à l'autre par un élément (33) de liaison,
l'élément (33) de liaison étant fixé à l'extrémité (110) d'au moins un élément (11) supérieur de levage de l'engin (2) de levage,
l'élément (11) supérieur de levage étant mobile par rapport à l'embase inférieure (4).

7. Dispositif suivant l'une quelconque des revendications précédentes, **caractérisé en ce que** l'engin (2) de levage comporte au moins un élément (11, 12, 13, 14) de levage articulé par au moins un axe de rotation par rapport à l'embase (4).

8. Dispositif l'une quelconque des revendications précédentes, **caractérisé en ce que** la plateforme (7) est fixée à au moins un des tubes (9, 10) d'isolation électrique par l'intermédiaire d'au moins un manchon (21, 22) enserrant le tube (9, 10) d'isolation électrique,
la partie (93, 103) des tubes (9, 10) d'isolation électrique étant fixée au support (3) d'extrémité de l'engin (2) automoteur de levage par l'intermédiaire d'au moins un autre manchon (25, 26) enserrant respectivement la partie (93, 103) des tubes (9, 10) d'isolation électrique.

9. Dispositif suivant la revendication 8, **caractérisé en ce que** chaque manchon (21, 22, 23, 24, 25, 26) comporte une première pièce (41) délimitant un premier espace (43) intérieur semi-cylindrique, une deuxième pièce (42) délimitant un deuxième espace (44) intérieur semi-cylindrique, des premier et deuxième axes (45, 47) de rotation s'étendant le long des espaces (43, 44) intérieurs semi-cylindriques et distants l'un de l'autre, des moyens (46) de serrage, et un tenon (48) de liaison,
la deuxième pièce (42) étant articulée par rapport à la première pièce (41) par le premier axe (45) de rotation,
les moyens (46) de serrage étant articulés par rapport à la deuxième pièce (42) par le deuxième axe (47) de rotation,
la première pièce (41) comportant un crochet (50) de serrage, qui est situé à distance du premier axe (45) de rotation et qui délimite une ouverture (51) apte à recevoir les moyens (46) de serrage,
la deuxième pièce (42) comportant un trou (52) de passage transversal par rapport aux premier et deuxième axes (45, 47) de rotation, le tenon (48) de liaison étant apte à être fixé dans le trou (52) de passage transversal et comportant une tête (53) extérieure de liaison,
le manchon (21, 22, 23, 24, 25, 26) étant apte à occuper une position de desserrage, dans laquelle la deuxième pièce (42) et la première pièce (41) sont ouvertes l'une par rapport à l'autre et les moyens (46) de serrage sont à distance de l'ouverture (51) du crochet (50) de serrage pour permettre d'insérer l'un des tubes (9, 10) d'isolation électrique dans les premier et deuxième espaces (43, 44) intérieurs semi-cylindriques,
le manchon (21, 22, 23, 24, 25, 26) étant apte à occuper une position de serrage, dans laquelle la première pièce (41) et la deuxième pièce (42) sont refermées l'une sur l'autre, ledit tube (9, 10) d'isolation électrique est serré dans les premier et deuxième espaces (43, 44) intérieurs semi-cylindriques entre la première pièce (41) et la deuxième pièce (42), les moyens (46) de serrage sont serrés contre l'ouverture (51) du crochet (50) de serrage, pour fixer le manchon sur le tube (9, 10) d'isolation électrique, le tenon (48) de liaison est fixé dans le trou (52) de passage transversal et la tête (53) extérieure de liaison est positionnée à l'extérieur de la deuxième pièce (42) et est fixée à la plateforme (7) ou au support (3) d'extrémité.

## Patentansprüche

1. Vorrichtung (1) zur Durchführung von Eingriffen an einer Leitungsanordnung (L) für den Transport oder die Verteilung von Elektrizität, aufweisend ein selbstfahrendes Hubgerät (2) zum Anheben eines Endträgers (3), der im Verhältnis zu einer unteren Basis (4) des Geräts (2) beweglich ist, mindestens einen Roboterarm (5, 6), der mit Werkzeugen zur ferngesteuerten Ausführung einer bestimmten Aufgabe an der Leitungsanordnung (L) versehen ist und der am Träger (3) befestigt ist,
**dadurch gekennzeichnet, dass**
der Roboterarm (5, 6) an einer Plattform (7, 8) befestigt ist, die jeweils an mindestens zwei elektrischen Isolationsrohren (9, 10) befestigt ist, die sich voneinander beabstandet und gegenüber befinden,
wobei ein Teil (93, 103) der elektrischen Isolationsrohre (9, 10) am Endträger (3) des selbstfahrenden Hubgeräts (2) befestigt ist,
wobei die Vorrichtung mindestens einen ersten Roboterarm (5) und mindestens einen zweiten Roboterarm (6) aufweist, die mit den Werkzeugen zur ferngesteuerten Ausführung einer bestimmten Aufgabe an der Leitungsanordnung (L) für den Transport von Elektrizität versehen sind und die am Träger (3) befestigt sind,
wobei der erste Roboterarm (5) und der zweite Roboterarm (6) jeweils an einer linken Plattform (7) und an einer rechten Plattform (8) befestigt sind, die an jeweils einer linken Seite (91, 101) und einer rechten Seite (92, 102) der mindestens zwei elektrischen Isolationsrohre (9, 10) befestigt sind,
wobei die linken Seiten (91, 101) der elektrischen Isolationsrohre (9, 10) voneinander beabstandet sind und sich gegenüber befinden,
wobei die rechten Seiten (92, 102) der elektrischen Isolationsrohre (9, 10) voneinander beabstandet sind und sich gegenüber befinden,
wobei die linke Seite (91, 101) jedes elektrischen Isolationsrohrs (9, 10) an seiner rechten Seite (92, 102) durch einen Mittelteil (93, 103) dieses elektrischen Isolationsrohrs (9, 10) angeschlossen ist und von seiner rechten Seite (92, 102) beabstandet ist,
wobei die Mittelteile (93, 103) der elektrischen Isolationsrohre (9, 10) am Endträger (3) des selbstfahrenden Hubgeräts (2) befestigt sind.

2. Vorrichtung nach Anspruch 1, **dadurch gekennzeichnet, dass** die Teile (93, 103) der elektrischen Isolationsrohre (9, 10), an denen der Endträger (3) des selbstfahrenden Hubgeräts (2) befestigt ist, voneinander beabstandet sind und sich gegenüber befinden.

3. Vorrichtung nach einem beliebigen der vorangehenden Ansprüche, **dadurch gekennzeichnet, dass** jedes elektrische Isolationsrohr (9, 10) eine elektrische Haltbarkeit über 50 kV je 30 cm Rohrlänge hat.

4. Vorrichtung nach einem beliebigen der vorangehenden Ansprüche, **dadurch gekennzeichnet, dass** jedes elektrische Isolationsrohr (9, 10) einen Längszylinder aufweist, der aus Glasfasern und Epoxydharz ist, wobei der Längszylinder mit einem Polyurethanschaum gefüllt ist.

5. Vorrichtung nach einem beliebigen der vorangehenden Ansprüche, **dadurch gekennzeichnet, dass** der Endträger (3) in einem Sicherheitsabstand (DS1) von mindestens 10 cm im Verhältnis zur Plattform (7) entlang jedes elektrischen Isolationsrohrs (9, 10) entfernt ist.

6. Vorrichtung nach einem beliebigen der vorangehenden Ansprüche, **dadurch gekennzeichnet, dass** der Endträger (3) des selbstfahrenden Hubgeräts (2) einen linken Längsträger (31) und einen rechten Längsträger (32) aufweist, die voneinander beabstandet sind, die sich quer zu den Teilen (93, 103) der elektrischen Isolationsrohre (9, 10) erstrecken, die an den Teilen (93, 103) der elektrischen Isolationsrohre (9, 10) befestigt sind und die durch ein Verbindungselement (33) aneinander angeschlossen sind,
wobei das Verbindungselement (33) am Ende (110) von mindestens einem oberen Hubelement (11) des Hubgeräts (2) befestigt ist,
wobei das obere Hubelement (11) im Verhältnis zur unteren Basis (4) beweglich ist.

7. Vorrichtung nach einem beliebigen der vorangehenden Ansprüche, **dadurch gekennzeichnet, dass** das Hubgerät (2) mindestens ein Hubelement (11, 12, 13, 14) aufweist, das durch mindestens eine Rotationsachse im Verhältnis zur Basis (4) angelenkt ist.

8. Vorrichtung nach einem beliebigen der vorangehenden Ansprüche, **dadurch gekennzeichnet, dass** die Plattform (7) an mindestens einem der elektrischen Isolationsrohre (9, 10) über mindestens eine Hülse (21, 22) befestigt ist, die das elektrische Isolationsrohr (9, 10) umspannt,
wobei der Teil (93, 103) der elektrischen Isolationsrohre (9, 10) am Endträger (3) des selbstfahrenden Hubgeräts (2) über mindestens eine andere Hülse (25, 26) befestigt ist, die jeweils den Teil (93, 103) der elektrischen Isolationsrohre (9, 10) umspannt.

9. Vorrichtung nach Anspruch 8, **dadurch gekennzeichnet, dass** jede Hülse (21, 22, 23, 24, 25, 26) ein erstes Teil (41) aufweist, das einen ersten halbzylindrischen Innenraum (43) begrenzt, ein zweites Teil (42), das einen zweiten halbzylindrischen Innenraum (44) begrenzt, erste und zweite Rotationsachsen (45, 47), die sich entlang der halbzylindrischen Innenräume (43, 44) erstrecken und voneinander beabstandet sind, Spannmittel (46) und einen Verbindungszapfen (48),
wobei das zweite Teil (42) im Verhältnis zum ersten Teil (41) durch die erste Rotationsachse (45) angelenkt ist,
wobei die Spannmittel (46) im Verhältnis zum zweiten Teil (42) durch die zweite Rotationsachse (47) angelenkt sind,
wobei das erste Teil (41) einen Spannhaken (50) aufweist, der sich von der ersten Rotationsachse (45) beabstandet befindet und der eine Öffnung (51) begrenzt, die imstande ist, die Spannmittel (46) aufzuehmen,
wobei das zweite Teil (42) ein Durchgangsloch (52) aufweist, das im Verhältnis zu den ersten und zweiten Rotationsachsen (45, 47) transversal ist, wobei der Verbindungszapfen (48) imstande ist, im transversalen Durchgangsloch (52) befestigt zu sein und einen äußeren Verbindungskopf (53) aufweist,
wobei die Hülse (21, 22, 23, 24, 25, 26) imstande ist, eine gelöste Position einzunehmen, in welcher das zweite Teil (42) und das erste Teil (41) im Verhältnis zueinander geöffnet sind und die Spannmittel (46) von der Öffnung (51) des Spannhakens (50) beabstandet sind, um das Einsetzen von einem der elektrischen Isolationsrohre (9, 10) in den ersten und zweiten halbzylindrischen Innenraum (43, 44) zu gestatten,
wobei die Hülse (21, 22, 23, 24, 25, 26) imstande ist, eine Spannposition einzunehmen, in welcher das erste Teil (41) und das zweite Teil (42) aufeinander geschlossen sind, wobei das elektrische Isolationsrohr (9, 10) in den ersten und zweiten halbzylindrischen Innenräumen (43, 44) zwischen dem ersten Teil (41) und dem zweiten Teil (42) gespannt ist, wobei die Spannmittel (46) gegen die Öffnung (51) des Spannhakens (50) gespannt sind, um die Hülse am elektrischen Isolationsrohr (9, 10) zu befestigen, wobei der Verbindungszapfen (48) im transversalen Durchgangsloch (52) befestigt ist und der äußere Verbindungskopf (53) außerhalb des zweiten Teils (42) positioniert ist und an der Plattform (7) oder am Endträger (3) befestigt ist.

## Claims

1. A device (1) for carrying out interventions on an electrical transmission or distribution line assembly (L), comprising a self-propelled lifting machine (2) for lifting a mobile end support (3) relative to a lower base (4) of the machine (2), at least one robot arm (5, 6), which is provided with tools for remote-controlled execution of a given task on the line assembly (L) and which is attached to the support (3),
**characterised in that**
the robot arm (5, 6) is attached to a platform (7, 8) that is respectively attached to at least two electrically insulating tubes (9, 10) located at a distance from one another and facing each other,
a portion (93, 103) of the electrically insulating tubes (9,10) being attached to the end support (3) of the self-propelled lifting machine (2),
the device comprises at least one first robot arm (5) and at least one second robot arm (6), which are provided with the tools for remote-controlled execution of a given task on the electrical transmission line assembly (L) and which are attached to the support (3),
the first robot arm (5) and the second robot arm (6) are respectively attached to a left platform (7) and to a right platform (8), which are respectively attached to a left side (91, 101) and a right side (92, 102) of the at least two electrically insulating tubes (9, 10),
the left sides (91, 101) of the electrically insulating tubes (9, 10) being located distant from one another and facing each other,
the right sides (92, 102) of the electrically insulating tubes (9, 10) being located distant from one another and facing each other,
the left side (91, 101) of each electrically insulating tube (9, 10) being connected to its right side (92, 102) by a middle portion (93, 103) of this electrically insulating tube (9, 10) and being distant from its right side (92, 102),
the middle portions (93, 103) of the electrically insulating tubes (9, 10) being attached to the end support (3) of the self-propelled lifting machine (2).

2. The device according to claim 1, **characterised in that** the portions (93, 103) of the electrically insulating tubes (9, 10), to which the end support (3) of the self-propelled lifting machine (2) is attached, are located distant from one another and facing each other.

3. The device according to any one of the preceding claims, **characterised in that** each electrically insulating tube (9, 10) has an electrical strength greater than 50 kV per 30 cm length of tube.

4. The device according to any one of the preceding claims, **characterised in that** each electrically insulating tube (9, 10) comprises a longitudinal cylinder, which is made of glass fibres and epoxy resin, the longitudinal cylinder being filled with a polyurethane foam.

5. The device according to any one of the preceding claims, **characterised in that** the end support (3) is separated by a safety distance (DS1) of at least 10 centimetres relative to the platform (7) along each of the electrically insulating tubes (9, 10).

6. The device according to any one of the preceding claims, **characterised in that** the end support (3) of the self-propelled lifting machine (2) comprises a left side beam (31) and a right side beam (32), which are distant from one another, which extend transverse to the portions (93, 103) of the electrically insulating tubes (9, 10), which are attached to the portions (93, 103) of the electrically insulating tubes (9, 10) and which are connected to one another by a connection element (33),
the connection element (33) being attached to the end (110) of at least one upper lifting element (11) of the lifting machine (2),
the upper lifting element (11) being mobile relative to the lower base (4).

7. The device according to any one of the preceding claims, **characterised in that** the lifting machine (2) comprises at least one lifting element (11, 12, 13, 14) articulated via at least one axis of rotation relative to the base (4).

8. The device according to any one of the preceding claims, **characterised in that** the platform (7) is attached to at least one of the electrically insulating tubes (9, 10) via at least one sleeve (21, 22) enclosing the electrically insulating tube (9, 10),
the portion (93, 103) of the electrically insulating tubes (9, 10) being attached to
the end support (3) of the self-propelled lifting machine (2) via at least one other sleeve (25, 26) respectively enclosing the portion (93, 103) of the electrically insulating tubes (9, 10).

9. The device according to claim 8, **characterised in that** each sleeve (21, 22, 23, 24, 25, 26) comprises a first part (41) delimiting a first semi-cylindrical interior space (43), a second part (42) delimiting a second semi-cylindrical interior space (44), first and second axes of rotation (45, 47) extending along the semi-cylindrical interior spaces (43, 44) and distant from one another, clamping means (46) and a connection pin (48),
the second part (42) being articulated relative to the first part (41) by the first axis of rotation (45),
the clamping means (46) being articulated relative to the second part (42) by the second axis of rotation (47),
the first part (41) comprising a clamping hook (50), which is located distant from the first axis of rotation (45) and which delimits an opening (51) capable of receiving the clamping means (46),
the second part (42) comprising a through-hole (52) transverse to the first and second axes of rotation (45, 47), the connection pin (48) being capable of being attached in the transverse through-hole (52) and comprising an outer connecting head (53),
the sleeve (21, 22, 23, 24, 25, 26) being capable of occupying a release position, in which the second part (42) and the first part (41) are open relative to one another and the clamping means (46) are at a distance from the opening (51) of the clamping hook (50) in order to allow one of the electrically insulating tubes (9, 10) to be inserted in the first and second semi-cylindrical interior spaces (43, 44),
the sleeve (21, 22, 23, 24, 25, 26) being able to occupy a clamping position, in which the first part (41) and the second part (42) are closed on one another, said electrically insulating tube (9, 10) is clamped in the first and second semi-cylindrical interior spaces (43, 44) between the first part (41) and the second part (42), the clamping means (46) are clamped against the opening (51) of the clamping hook (50), in order to attach the sleeve on the electrically insulating tube (9, 10), the connection pin (48) is attached in the transverse through-hole (52) and the outer connecting head (53) is positioned on the outside of the second part (42) and is attached to the platform (7) or to the end support (3).
